# EUROPÄISCHE PATENTSCHRIFT

(11) **EP 0 522 471 B1**
(45) Veröffentlichungstag und Bekanntmachung des Hinweises auf die Patenterteilung: **27.04.1994**
(21) Anmeldenummer: 92111340.3
(22) Anmeldetag: 03.07.1992
(51) Int. Cl.: F01P 3/18, F28D 1/04, F02B 29/04

(54) **Kühleranordnung**
Cooler arrangement
Aménagement d'échangeur de chaleur

(30) Priorität: 11.07.1991 DE 4122899; 24.06.1992 DE 4220672
(43) Veröffentlichungstag der Anmeldung: 13.01.1993
(73) Patentinhaber: MERCEDES-BENZ AG, 70327 Stuttgart (DE)
(72) Erfinder: Eibl, Markus, Dipl.-Ing., W-7000 Stuttgart 1 (DE)

(56) Entgegenhaltungen:
- EP-A- 0 048 667
- DE-A- 1 755 657
- US-A- 3 439 657

## Beschreibung

Die Erfindung betrifft eine Kühleranordnung gemäß dem Oberbegriff des Hauptanspruchs.

Zur Kühlung von Brennkraftmaschinen in Kraftfahrzeugen werden immer leistungsfähigere Systeme benötigt. Zum einen werden zur Reduzierung der Lärmemission die Motoren mit einer Kapselung umgeben, was zu einer Verringerung der Kühlleistung führt. Zum anderen werden zur Verringerung der Abgasemission vor allem bei Dieselmotoren hohe Ladeluftdrücke verwendet, was eine starke Rückkühlung der Ladeluft und somit hohe Kühlleistungen notwendig macht.

Aus der DE-OS 26 55 017 ist ein mehrteiliges Ladeluft-Kühlsystem bekannt, bei dem Ladeluftkühlerteile vor und hinter einem Flüssigkeitskühler der Brennkraftmaschine vorgesehen sind, wobei die einzelnen Kühler auf der Ladeluftseite mit fallender und im Kühlluftstrom mit steigender Temperatur in Strömungsrichtung hintereinander angeordnet sind. Dies hat den Nachteil, daß nur ein Teil des Ladeluftkühlers von Frischluft und der Flüssigkeitskühler nur von der erwärmten Abluft des stromauf davorliegenden Ladeluftkühlerteils beaufschlagt wird, wodurch sich die Temperaturdifferenz und damit auch die Kühlleistung verringert.

Außerdem wird in in der ATZ (1981) Heft 9, Seite 449/450 vorgeschlagen, nur einen Teil der Stirnfläche des Kühlmittelkühlers durch den Ladeluftkühler zu bedecken, damit Raum für die Anordnung eines weiteren Kühlers gegeben ist.

Der Erfindung liegt die Aufgabe zugrunde, die Kühlleistung einer Kühleranordnung gemäß dem Oberbegriff des Hauptanspruchs zu optimieren.

Die Aufgabe wird erfindungsgemäß durch die Merkmale des kennzeichnenden Teiles des Hauptanspruches gelöst.

Die Aufteilung des zweiten Kühlers in zwei getrennte und bezüglich der Stirnfläche des ersten Kühlers versetzte Kühlerteile ermöglicht eine Anordnung die es erlaubt, die Temperaturdifferenz zwischen Kühlluft und dem zu kühlenden Medium für das Kühlersystems zu maximieren und dadurch die Kühlleistung der gesamten Kühleranordnung zu optimieren. Dadurch kann entweder bei unveränderter Dimensionierung der Kühleranordnung die Kühlleistung verbessert oder bei gleichbleibender Kühlleistung die Kühleranordnung kompakter ausgeführt werden.

Die erfindungsgemäße Anordnung der Kühlerteile gewährleistet, daß neben dem vorderen Teil des zweiten Kühlers auch mindestens eine Teilfläche des ersten Kühlers von Frischluft beaufschlagt wird, wodurch eine Abkühlung beider Kühlmedien auf tiefere Temperaturen möglich wird. Außerdem kann durch die parallele Durchströmung zweier Kühlerteile der Durchflußwiderstand vermindert werden.

Ein Ausführungsbeispiel der Erfindung ist anhand der Zeichnung näher beschrieben, wobei
- Fig. 1: eine Prinzipdarstellung einer Kühleranordnung für eine wassergekühlte aufgeladene Brennkraftmaschine,
- Fig. 2: eine Prinzipdarstellung einer zweiten erfindungsgemäßen Kühleranordnung und
- Fig. 3: eine Prinzipdarstellung einer weiteren Kühleranordnung zeigen.

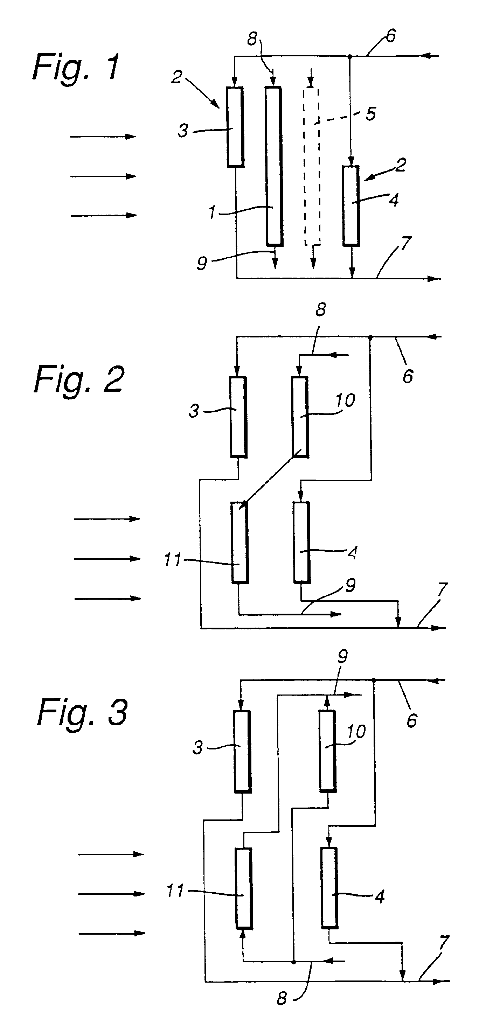

Die Fig. 1 zeigt einen als Luft/Wasser-Wärmetauscher ausgebildeten Motorwasserkühler 1 und einen geteilten, als Luft/Luft-Wärmetauscher ausgebildeten Ladeluftkühler 2. Der Ladeluftkühler 2 besteht aus einem vorderen Kühlerteil 3 und einem hinteren Kühlerteil 4. Die Kühler sind in der Reihenfolge vorderes Kühlerteil 3 des Ladeluftkühlers 2, Motorwasser-Kühler 1 und hinteres Kühlerteil 4 des Ladeluftkühlers 2 in Strömungsrichtung der Kühlluft unmittelbar hintereinander angeordnet. Beide Kühlerteile 3 und 4 des Ladeluftkühlers 2 sind so ausgebildet, daß ihre von Kühlluft beaufschlagte Stirnfläche jeweils halb so hoch und gleich breit sind, wie die von Kühlluft beaufschlagte Stirnfläche des Motorwasser-Kühlers 1. Dabei sind die Kühlerteile 3, 4 des Ladeluftkühlers 2 so angebracht, daß das vordere Kühlerteil 3 vor der oberen Hälfte der Stirnfläche des Motorwasser-Kühlers 1 und das hintere Kühlerteil 4 hinter der unteren Hälfte der Kühlfläche des Motorwasser-Kühlers 1 liegt. Von einem nicht dargestellten, durch eine Abgasturbine angetriebenen Lader wird die komprimierte und heiße Ladeluft beiden Kühlerteilen 3, 4 über eine Zuströmleitung 6 parallel zugeführt und nach Durchströmen der Kühlerteile 3, 4 die abgekühlte Ladeluft über die Abströmleitung 7 zur ebenfalls nicht dargestellten Brennkraftmaschine abgeführt.

Obwohl die Ladeluft mit ungefähr identischer Temperatur in die beiden Kühlerteile 3, 4 des Ladeluftkühlers 2 eingeleitet wird, weisen die beiden Ladeluftteilströme beim Verlassen der Kühlerteile 3, 4 trotz identischer Kühlerflächen unterschiedliche Austrittstemperaturen auf. Da der vordere Kühlerteil 3 direkt mit Frischluft beaufschlagt ist, weist dieser Ladeluftteilstrom eine relativ geringe Austrittstemperatur auf. Dagegen wird das hintere Kühlerteil 4 mit der vorgewärmten Abluft des Motorwasser-Kühlers 1 beaufschlagt, so daß die Austrittstemperatur, bedingt durch die geringere Temperaturdifferenz, deutlich über der Austrittstemperatur des anderen Ladeluftteilstromes liegt. Durch die parallele Durchströmung der Kühlerteile 3, 4 läßt sich somit die Temperatur des gesamten Ladeluftstroms, die sich durch das Mischen der beiden Ladeluftteilströme ergibt, durch eine geeignete Dimensionierung der beiden Kühlerteile 3, 4 einstellen. Außerdem kann dadurch der Durchflußwiderstand des gesamten Ladeluftkühlers 2 verringert werden.

Der vordere Kühlerteil 3 des Ladeluftkühlers 2 ist notwendig, da die Ladeluft von hochaufgeladenen Dieselmotoren zur Erreichung guter Leistungs- und Abgaswerte auf ca. 50 Grad Celsius abgekühlt werden muß, was nur mit der Beaufschlagung mit kühler Frischluft möglich ist. Mit der Abluft des vorderen Kühlerteils 3 des Ladeluftkühlers 2 wird dann der obere Teil des Motorwasser-Kühlers 1 beaufschlagt, wo sich der Einlaß 8 des zu kühlenden Motorwassers befindet. Dadurch kann bereits in diesem oberen Teil des Motorwasser-Kühlers 1 ein großer Teil der Wärmeenergie abgegeben werden kann. Dies hat zur Folge, daß der mit kühler Frischluft beaufschlagte untere Teil des Motorwasser-Kühlers 1 nur noch einen geringeren Anteil der Wärmemenge aufnehmen muß, so daß die geringere Temperatur dieser Abluft wiederum die große Temperaturdifferenz zur einströmenden Ladeluft im hinteren Kühlerteil 4 des Ladeluftkühlers 2 ermöglicht. Das abgekühlte Motorwasser wird dann über den Auslaß 9, der sich am unteren Teil des Motorwasser-Kühlers 1 befindet, in das Motorkühlsystem eingeleitet.

Diese effektivere Kühleranordnung ermöglicht es entweder bei gleicher Stirnfläche der Kühleranordnung und gleichem Kühlluftstrom die Kühlleistung zu erhöhen oder die gleiche Kühlleistung bei geringerem Kühlluftstrom oder kleinerer Stirnfläche, das heißt mit kompakteren Kühlsystemen, zu erreichen.

In einer weiteren Ausgestaltung der Erfindung ist es auch möglich, den Ladeluftkühler 2 einteilig und den Motorwasser-Kühler 1 zwei- oder mehrteilig auszuführen. Die Anordnung erfolgt dann so, daß ein Teil des Motorwasser-Kühlers 1 vor und ein anderer Teil hinter dem Ladeluftkühler 2 angeordnet wird. Ebenfalls ist eine andere Aufteilung der Kühlflächenverhältnisse der Kühlerteile 3 und 4 denkbar. Schließlich können zwischen den Kühlerteilen 3, 4 des Ladeluftkühlers 2 noch weitere Kühler 5 angeordnet werden, wobei die Stirnflächen dieser weiteren Kühler 5 im Vergleich zur Stirnfläche des Motorwasserkühlers 1 abweichende Abmessungen aufweisen können.

Fig. 2 zeigt ein weiters Ausführungsbeispiel der erfindungsgemäßen Kühleranordnung, wobei gegenüber Fig. 1 gleiche Teile mit gleichen Bezugsziffern gekennzeichnet sind. Im Gegensatz zu Fig. 1 sind in diesem Ausführungsbeispiel beide Kühler 1, 2 geteilt ausgebildet, wobei die Kühlerteile 10, 11 des Motorwasser-Kühlers 1 ebenfalls versetzt angeordnet sind, so daß die Kühlerteile 3 und 11, sowie 4 und 10, jeweils in einer gemeinsamen Ebene angeordnet sind. Die Kühlerteile 3, 4 des Ladeluftkühlers 2 werden, wie in Fig. 1, parallel mit Ladeluft beaufschlagt. Die Kühlerteile 10, 11 des Motorwasser-Kühlers 1 werden nacheinander von dem Motorwasser durchströmt, wobei die Zufuhr des Motorwassers zu dem hinter dem vorderen Kühlerteil 3 des Ladeluftkühlers 2 angeordneten Kühlerteil 10 des Motorwasser-Kühlers 1 erfolgt. Somit besteht der Unterschied gegenüber Fig. 1 nur darin, daß der Motorwasser-Kühler 1 nicht einteilig, sondern zweiteilig und in Richtung der Kühlluftströmung versetzt angeordnet ist.

Fig. 3 zeigt schließlich noch ein weiteres Ausführungsbeispiel, bei dem die Kühlerteile 3, 4, 10, 11 entsprechend Fig. 2 angeordnet sind. Nur im Gegensatz zu Fig. 1 erfolgt hier die Zufuhr von Motorwasser zum Motorwasser-Kühler 1 nicht seriell, sondern ebenfalls parallel. Die beiden Kühlsysteme 1, 2 können dabei gegensinnig, wie in Fig. 3 gezeigt, oder auch gleichsinnig vom jeweiligen Kühlmedium durchströmt werden.

Neben den bisher beschriebenen Ausführungsbeispielen sind auch noch Anordnungen mit weiteren ungeteilten oder geteilten Kühlern denkbar. Außerdem können die Kühler statt in zwei auch in mehrere Kühlerteile aufgeteilt sein.

## Patentansprüche

1. Kühleranordnung bei einem Kraftfahrzeug mit mindestens einem ersten und einem zweiten Kühler, die gemeinsam von Kühlluft beaufschlagt sind und von denen zumindest der zweite Kühler geteilt ist und ein bezogen auf den Kühlluftstrom vor und ein hinter dem mindestens einen ersten Kühler liegendes Kühlerteil aufweist und mit einer ersten Zufuhr eines ersten Kühlmediums zum ersten Kühler und mit einer zweiten Zufuhr eines zweiten Kühlmediums zum zweiten Kühler,
**dadurch gekennzeichnet,**
daß die Teile (3, 4) des zweiten Kühlers (2) im wesentlichen verschiedenen, gegeneinander versetzten Teilflächen des mindestens einen ersten Kühlers (1) zugeordnet sind, wobei zumindest die Teile (3, 4) des zweiten Kühlers (2) parallel mit Kühlmedium beaufschlagt sind.

2. Kühleranordnung nach Anspruch 1,
**dadurch gekennzeichnet,**
daß auch der erste Kühler (1) geteilt ist.

3. Kühleranordnung nach Anspruch 2,
**dadurch gekennzeichnet,**
daß die Teile (10, 11) des ersten Kühlers (1) nacheinander vom ersten Kühlmedium durchströmt werden, wobei das erste Kühlmedium zuerst dem hinter dem vorderen Teil (3) des zweiten Kühlers (2) angeordneten Kühlerteil (10) des ersten Kühlers (1) zugeführt wird.

4. Kühleranordnung nach Anspruch 2,
**dadurch gekennzeichnet,**
daß die Teile (10, 11) des ersten Kühlers (1) parallel mit dem ersten Kühlmedium beaufschlagt sind.

## Claims

1. Cooler arrangement in a vehicle with at least one first and one second cooler, which jointly have cool air applied to them and of which at least the second cooler is divided up and which has one cooler section lying in front of the at least one first cooler and one cooler section lying behind the at least one first cooler, in relation to the cool air flow. and with a first feed supply of a first coolant to the first cooler and with a second feed supply of a second coolant to the second cooler. wherein the sections (3. 4) of the second cooler (2) are associated with substantially different, opposite, adjacent surface section of the at least one first cooler (1). whereby at least the sections (3. 4) of the second cooler (2) have coolant applied to them in a parallel arrangement.

2. Cooler arrangement in accordance with claim 1. wherein the first cooler (1) is also divided up.

3. Cooler arrangement in accordance with claim 2. wherein first coolant flows through sections (10, 11) of the first cooler (1). flowing through the one section after the other. whereby the first coolant is first fed to the cooler section (10) of the first cooler (1) behind the front section (3) of the second cooler (2).

4. Cooler arrangement in accordance with claim 2. wherein the sections (10, 11) of the first cooler (1) have the first coolant applied to them in a parallel arrangement.

## Revendications

1. Arrangement de radiateurs dans un véhicule automobile, comprenant au moins un premier et un second radiateurs qui sont balayés ensemble par de l'air de refroidissement et dont au moins le second radiateur est subdivisé et comprend une partie qui est placée devant et une partie qui est placée derrière l'au moins premier radiateur par rapport au flux d'air de refroidissement, ainsi qu'une première arrivée d'un premier fluide à refroidir dans le premier radiateur et une seconde arrivée d'un second fluide à refroidir dans le second radiateur, caractérisé en ce que les parties (3, 4) du second radiateur (2) sont disposées en face de surfaces parallèles sensiblement différentes, décalées l'une par rapport à l'autre, de l'au moins premier radiateur (1), du fluide à refroidir circulant en parallèle au moins dans les parties (3, 4) du second radiateur (2).

2. Arrangement de radiateurs selon la revendication 1, caractérisé en ce que le premier radiateur (1) est aussi subdivisé.

3. Arrangement de radiateurs selon la revendication 2, caractérisé en ce que le premier fluide à refroidir circule successivement dans les parties (10, 11) du premier radiateur (1), le premier fluide à refroidir étant dirigé tout d'abord sur la partie (10) du premier radiateur (1) qui est disposée derrière la partie antérieure (3) du second radiateur (2).

4. Arrangement de radiateurs selon la revendication 2, caractérisé en ce que le premier fluide à refroidir circule en parallèle dans les parties (10, 11) du premier radiateur (1).
